# EUROPEAN PATENT APPLICATION

(11) **EP 1 635 437 A1**
(43) Date of publication of application: **15.03.2006**
(21) Application number: 05255545.5
(22) Date of filing: 09.09.2005
(51) Int. Cl.: H02H 9/00

(54) **Limiting energy delivered to an inline or serial arc in a supply wiring**

(30) Priority: 14.09.2004 US 941195
(71) Applicant: KH Controls, Inc., Blairsville, PA 15717 (US)
(72) Inventor: Huczko, Kevin M., New Florence, PA 15944 (US); Huczko, Roger D., Pittsburgh, PA 15239 (US); Pisarski, Stanley J., Portage, PA 15946 (US); Yeager, Brett M., Blairsville, PA 15717 (US)
(74) Representative: O'Connell, David Christopher

(57) **Abstract**

A technique to limit energy in inline wiring faults. The technique employs a device which detects the presence of the fault by sensing voltage at the load end of a circuit that is at risk for an inline arcing fault. Upon detecting the drop in voltage at the load end of the feeder circuit the device acts to interrupt the current in the circuit loop feeding the fault. This action reduces the energy delivered to the fault. This technique is of value in any circuit and results in a substantial reduction in fault energy when employed in a DC circuit feeding an inductive load with a freewheeling diode.

## Description

### FIELD OF THE INVENTION

The present invention relates to limiting energy delivered to inline faults in electrical power distribution networks by interrupting the flow of current to or from the load device in response to a detected fault. More specifically, the present invention relates to limiting energy delivered to inline faults in electrical power distribution networks by interrupting the flow of current to or from the load device in response to a detected fault with an integral switch connected between a positive input lead and a positive output lead or an integral switch connected between a negative input lead and a negative output lead.

### BACKGROUND OF THE INVENTION

This discussion explores an innovation that limits the energy delivered to a fault in the electrical circuitry feeding an electrical load. This feature is of general value in many electrical systems and of great value in electrical systems that deliver power in hazardous atmospheres. The fault and its associated energy could become a source of ignition and result in a fire or explosion.

Typically electrical equipment, components and systems that demonstrate the ability to avoid such an ignition are classified as intrinsically safe for a specific hazard.

A significant market for this solution is in the underground coal mining industry. In this industry, intrinsic safety is specifically defined in many publications. In the United States intrinsic safety is referenced by Title 30 of the Code of Federal Regulations Part 18 by the US Department of Labor, Mine Safety and Health Administration (MSHA). Internationally intrinsic safety is referenced in EN50020, IEC 60079-11 and many other international standards.
Wiring Faults as a Source of Ignition

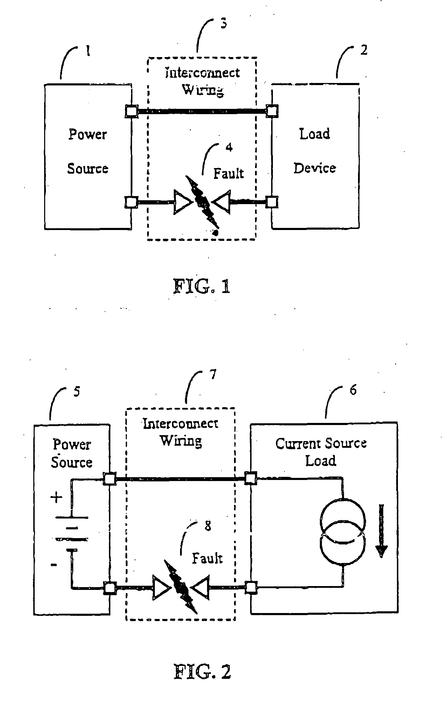

One type of wiring fault that is a potential ignition source is illustrated in FIG. 1. The fault 4 could be a broken wire or conductor in the interconnection 3 between the power source 1 and the load 2. If electrical current is flowing through the conductor as the conductor breaks an electrical arc 4 is created. This arc 4 is a potential ignition source. The ignition potential or risk is increased if the wiring 3 is located in a hazardous atmosphere.

The arc energy or ignition potential is greatly increased if the load device exhibits characteristics to maintain the flow of current into the fault as shown in FIG. 2. For example, an inductive load similar to a solenoid has this characteristic. The inductance of the load will mimic a constant current source 6. It will act to maintain the flow of current from the power source 5 through the interconnect wiring 7 and into the fault 8 to for the duration of the fault. This will increase the probability of ignition at a given level of current or it will greatly limit the maximum "Safe" level of current to insure that an ignition can not occur.
Freewheeling Diode - Typical Solution for Inductive Loads

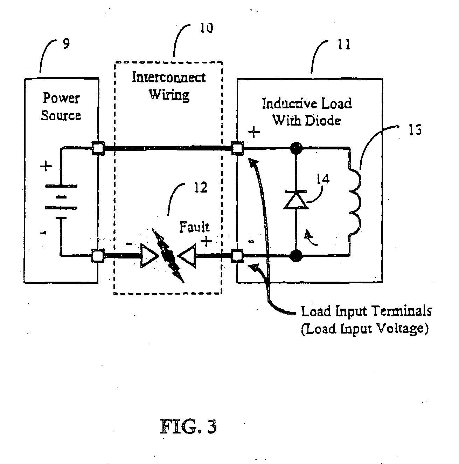

It is commonly accepted in many industries, including areas of intrinsic safety, that the use of a freewheeling diode can isolate the energy trapped in an inductive load when the path from the source is interrupted. The application of a freewheeling diode is illustrated in FIG. 3. The freewheeling diode 14 provides a path for the current trapped in the inductive load 13 when the path from the source 9 is opened. Typically, the path would be opened by a switch or control device to de-energize the load. The path or interconnect wiring 10 might also be disrupted by an in line fault 12.

A simple analysis of the circuit reveals that the current will only transfer from the fault 12 into the freewheeling diode 14 if and when the voltage across the fault 12 reaches the output voltage of the power source 9 plus the forward voltage drop of the freewheeling diode 14. Typically, this transfer occurs when the normal source path is opened. This will occur for example when the load is turned off by opening the current delivery path at the source 9. Ideally, this transfer will also occur very fast in the event of the inline fault 12 shown in FIG. 3. Very fast infers a time duration much shorter than the time required to deliver sufficient energy to create an ignition resulting in an explosion or fire.

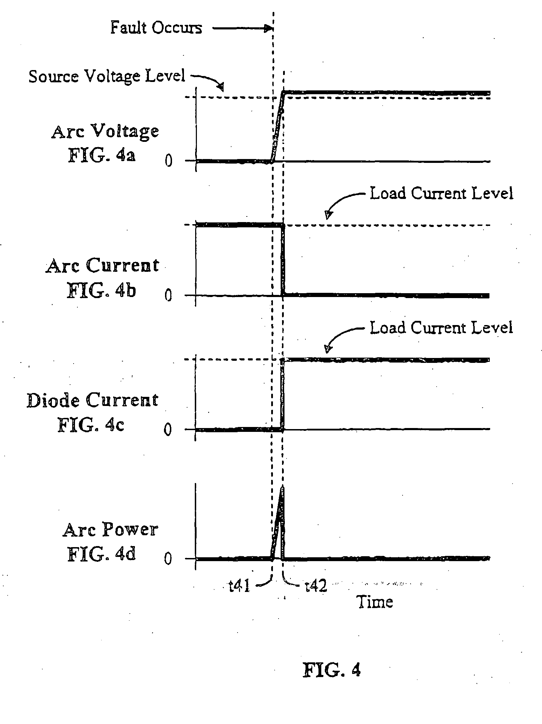

The diagrams in FIG. 4 illustrate the ideal transfer of current in the circuit of FIG. 3 from the arcing fault 12 into the freewheeling diode 14. Given an arcing fault 12 that occurs at time t41, the arc voltage shown in FIG. 4a will appear at time t41 and increase abruptly to the level of source voltage plus the forward drop of the freewheeling diode at time t42. The arc current shown in FIG. 4b will remain constant at the level of load current for the time period spanning time t41 to time t42. At time t42 the freewheeling diode 14 becomes forward biased and accepts the transfer of current as shown in FIG. 4c. The power delivered to the arc, arc voltage FIG. 4a multiplied by arc current FIG. 4b is illustrated in FIG. 4d. This transfer process relies on forward biasing the diode. It should be noted that as the transfer of current from the arc into the diode begins, the negative impedance characteristic of the arc accelerates the transfer. As the current in the arc starts to decrease the arc voltage tends to increase and thus transfers the current more quickly.
The Shortcomings of a Freewheeling Diode

The preceding simple assessment of the arc overlooks an important electrical characteristic of the arc. In fact it is well known through electrical arc welding and other plasma arc processes that the arc may have a voltage limiting characteristic. The actual arc voltage is related to many factors including the geometry of the electrical points feeding the arc, the contact material, temperature, the gas composition of the atmosphere, etc. Therefore, there is no predetermined precise voltage for the arc due to a fault. In fact, the voltage may fluctuate widely due to changes in the conditions from the burning arc. The arc voltage relative to the power source voltage is indeterminate. The previous example of current transfer in FIG. 4 relies on an arc voltage which attempts to exceed the power source voltage immediately.

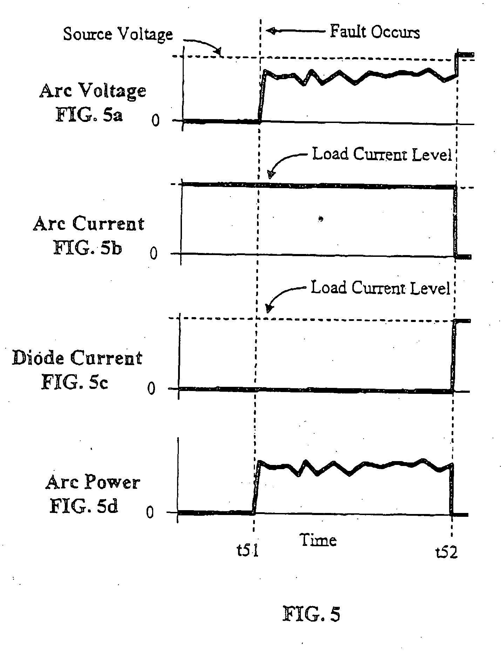

The diagrams in FIG. 5 illustrate a current transfer for the circuit of FIG. 3 given an arc voltage that could be below the level of the source voltage for some period of time. Given an arcing fault 12 that occurs at time t51, the arc voltage shown in FIG. 5a will appear at time t51 and increase abruptly. However, due to the characteristic of the arc the voltage drop of the arc will not reach or exceed the level of source voltage for some period of time. At an arbitrary point in time, time t52, the arc voltage FIG. 5a exceeds the level of the source voltage 9 plus the forward drop of the freewheeling diode 14. The freewheeling diode current is illustrated in FIG. 5c. Note that no current diverts through the freewheeling diode 14 until it becomes forward biased at time t52. The forward bias condition occurs only if and when the voltage across the arc exceeds the source voltage plus the diode forward drop voltage. Throughout the time period spanning t51 to t52 the arc current FIG. 5b remains constant. The power delivered to the arc is illustrated in FIG. 5d. The resulting energy, integration of power over time, delivered to the arc is substantially greater than initially expected. The freewheeling diode 14 does not guarantee that the current is quickly transferred from the arc 12.

This is a significant observation. It means that in the circuit of FIG. 3 a freewheeling diode 14 can not definitively contain the trapped energy of the inductive load 13 from feeding into the fault 12. In addition, current flow is maintained around the overall loop allowing the power source 9 to contribute added energy to the fault 12. Therefore, an inductive load 13 with freewheeling diode 14 must be considered carefully in any analysis or test for the ignition potential of a fault in the circuit 10 feeding the load 11. For test purposes to assess the ignition risk of a circuit the actual device and wiring network must be included in the test. A non-inductive or resistive equivalent load may not be used.

### SUMMARY OF THE INVENTION

The present invention pertains to an apparatus which limits energy delivered to inline faults in electrical power distribution networks. The apparatus comprises an input having a positive and negative lead connected to a source of DC power. The apparatus comprises an output having a positive and negative lead connected to a load device. The apparatus comprises a detector for detecting the inline fault. The apparatus comprises a mechanism to interrupt the flow of current to or from the load device in response to a detected fault.

The present invention pertains to a method by which the energy delivered to an inline fault in a DC electrical power distribution network can be limited. The method comprises the steps of detecting the fault by indirectly sensing a voltage drop induced by the fault by monitoring voltage at a load end of a power circuit branch for a drop. There is the step of interrupting flow of current in a loop in which the fault is located.

The present invention pertains to a method for determining the safety of an electrical system. The method comprises the steps of testing the electrical system that includes inductive loads protected by freewheeling diodes which prohibits replacing the inductive loads protected by freewheeling diodes with non-inductive or resistive loads for test purposes. There is the step of determining whether the electrical system is safe.

### BRIEF DESCRIPTION OF THE DRAWINGS

In the accompanying drawings, the preferred embodiment of the invention and preferred methods of practicing the invention are illustrated in which:
FIG. 1 Diagram of Power Source, Load and Interconnect Wiring with Fault
FIG. 2 Diagram of Power Source, Current Source Load and Interconnect Wiring with Fault
FIG. 3 Diagram of Inductive Load with Freewheeling Diode
FIG. 4 Waveforms for Ideal Current Transfer
FIG. 5 Waveforms for Current Transfer with Limited Arc Voltage
FIG. 6 Waveforms for Input Voltage Drop
FIG. 7 Diagram of Conceptual Enhancement Device
FIG. 8 Waveforms for Conceptual Enhancement Device
FIG. 9 Diagram of Power Source, Inductive Load and Interconnect Wiring with Fault and Lumped Stray Inductance
FIG. 10 Diagram of Power Source, Inductive Load and Interconnect Wiring with Fault and Lumped Stray Inductance
FIG. 11 Waveforms for Enhancement Device with Input Voltage Limiting Device in the Presence of Stray Inductance
FIG. 12 Diagram of Enhancement Device with Turn-On Delay
FIG. 13 Waveforms for Turn-On Delay Function
FIG. 14 Diagram of Alternate Device Configurations and Fault Locations
FIG. 15 Diagram of Alternate Use of Detector Circuit Output
FIG. 16 Diagram of System Configuration with Individually Protected Loads
FIG. 17 Diagram of System Configuration with Protection for Multiple Loads
FIG. 18 Diagram of Redundant Implementation
FIG. 19 Diagram of Details of the Preferred Embodiment of the Device
FIG. 20 Diagram of the Enhancement Device

### DETAILED DESCRIPTION

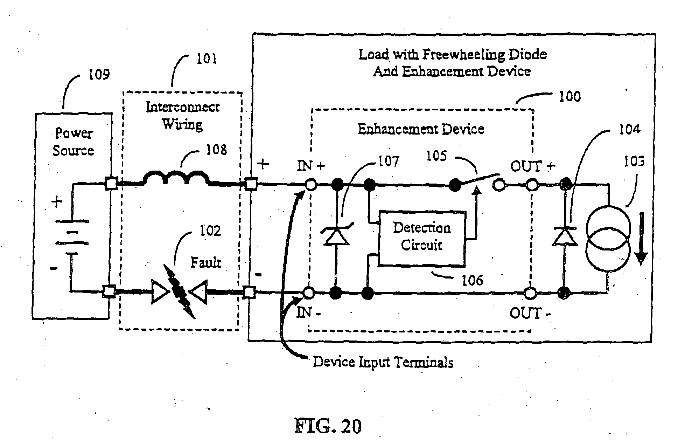

Referring now to the drawings, and more specifically to figure 20 thereof, there is shown an apparatus which limits energy delivered to inline faults in electrical power distribution networks 101. The apparatus comprises an input having a positive and negative lead connected to a source of DC power. The apparatus comprises an output having a positive and negative lead connected to a load device. The apparatus comprises a detector 106 for detecting the inline fault. The apparatus comprises a mechanism 100 to interrupt the flow of current to or from the load device in response to a detected fault.

Preferably, the interrupting mechanism 100 is an integral switch 105 connected between the positive input lead and the positive output lead or an integral switch 105 connected between the negative input lead and the negative output lead. The apparatus preferably includes a plurality of interrupting switch mechanisms 100 connected between the positive input lead and the positive output lead or an integral switch 105 connected between the negative input lead and the negative output lead. Alternatively, the apparatus includes an integral voltage limiting device 107 connected directly across the input positive and negative leads. Preferably, the apparatus includes a plurality of voltage limiting devices 107 connected directly across the input positive and negative leads.

Alternatively, the apparatus controls a remote switch located in the current feed or return path as the interrupting mechanism 100. The apparatus can control a remote turn off function of the DC power source as the interrupting mechanism 100. The apparatus can feed an inductive load device 103 or devices with integral freewheeling diode or diodes 104.

Alternatively, the detector 106 senses the input voltage to the device and responds to a drop in or dropping input voltage. The detector 106 can include a start up or restart delay to provide protection against sputtering faults. The start up delay function is preferably fully reset during each operation of the device. The detector 106 can include a low line drop out protection function.

The present invention pertains to a method by which the energy delivered to an inline fault in a DC electrical power distribution network can be limited. The method comprises the steps of detecting the fault by indirectly sensing a voltage drop induced by the fault by monitoring voltage at a load end of a power circuit branch for a drop. There is the step of interrupting flow of current in a loop in which the fault is located.

There is preferably the step of reducing the energy delivered to a fault in the network feeding a load device or devices in the presence of faults with voltage drops lower than a level of the DC power source. Preferably, there is the step of reducing the energy delivered to a fault in the network feeding a load device with inductive characteristics that includes an integral freewheeling diode 104. There is the step of incorporating a restart delay in the detection circuit that latches in a fault condition for a specified period of time to inhibit reconnection to an existing arcing fault.

The present invention pertains to a method for determining the safety of an electrical system. The method comprises the steps of testing the electrical system that includes inductive loads protected by freewheeling diodes 104 which prohibits replacing the inductive loads protected by freewheeling diodes 104 with non-inductive or resistive loads for test purposes. There is the step of determining whether the electrical system is safe.

Preferably, there is the step of requiring that the test must be performed in the presence of stray line inductances and the inductive loads protected by freewheeling diodes 104.

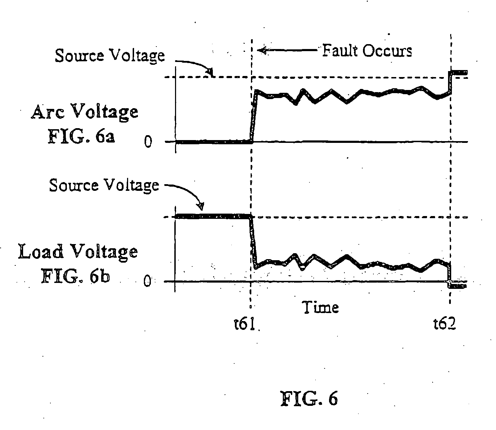

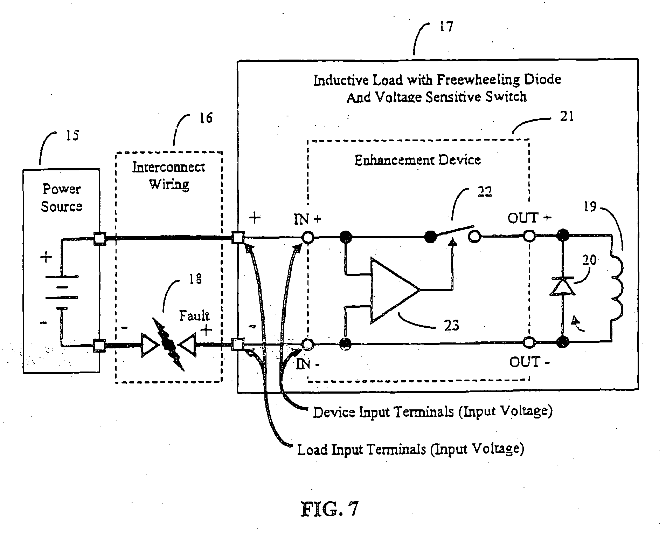

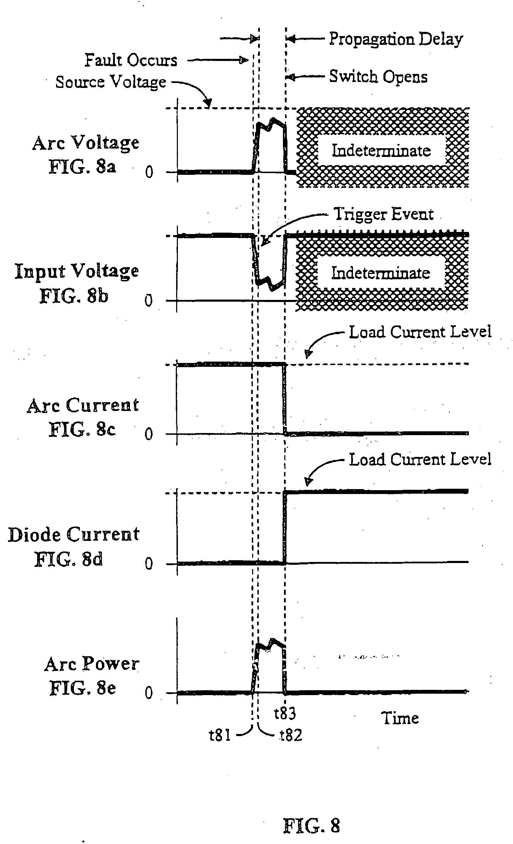

In the operation of the invention, the occurrence of an arcing fault in the interconnect wiring 10 of FIG. 3 is difficult to detect from the terminals of the power source 9. However, referring to FIG. 6, the initial rise in arc voltage FIG. 6a at time t61 is accompanied by a corresponding drop in input voltage to the load FIG. 6b. The fall and/or rate of fall of the load terminal voltage FIG. 6b at time t61 can be used to facilitate the transfer of current away from the arc. This concept is illustrated in FIG. 7. The enhancement device 21 is shown as a switch 22 with voltage sensitive detector 23 that responds to the fall and/or rate of fall of input voltage to the device. The input voltage to the device is the load input voltage. And more specifically the input voltage to the device is the voltage at the load end of the interconnect wiring 16 that is at risk of a potentially dangerous inline fault 18. The fall of or falling input voltage is detected by the voltage sense circuit 23. In response the switch 22 is opened. This action interrupts the overall load current path that feeds the arcing fault 18 and forces the current trapped in the inductive load 19 into the freewheeling diode 20. The transfer of current facilitated by the enhancement device is illustrated in the diagrams provided in FIG. 8. Given an arcing fault 18 that occurs at time t81, the arc voltage shown in FIG. 8a will appear at time t81 and increase abruptly. The arc voltage FIG. 8a increase at time t81 will result in a corresponding device input voltage FIG. 8b decrease at time t81. The voltage has fallen sufficiently to be detected by the voltage sensitive detector 23 at time t82 which triggers operation of the switch 22. The finite operation time or propagation delay spans from the time of detection at time t82 to the time at which the switch 22 opens at time t83. Upon opening switch 22 at time t83 the arc current FIG.8c falls to zero and the current trapped in the inductive load 19 is transferred into the freewheeling diode 20. Also, the power FIG. 8e delivered to the arc 18 is forced to zero at time t83. The resulting energy, integration of power over time, delivered to the arc is limited. This technique overcomes the voltage limiting characteristic of the arc in situations where the arc voltage could be below the source voltage level. In addition, this technique further takes advantage of the negative impedance and nonlinear characteristics of the arc. In fact, the arc voltage will rise as current is diverted away through the diode. This results in a further increase in arc voltage and accelerates the process of diverting current and extinguishing the arc.
Transient Suppression for Interconnect Wiring Inductance

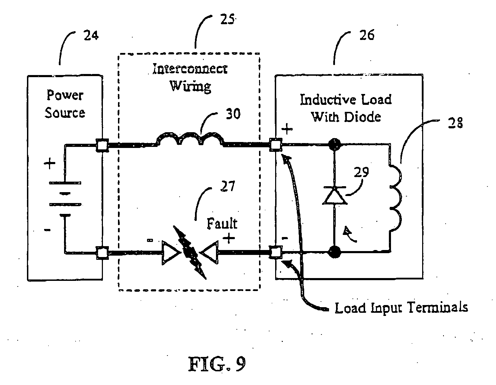

It is also important to consider the effects of the wiring inductance on the energy delivered to the fault. For analysis purposes the stray inductance may be lumped as shown in FIG. 9. The stray inductance exists throughout the interconnect circuitry 25. The lumped equivalent inductance 30 is shown as part of the interconnect wiring 25 connecting the power source 24 to the load 26. It is commonly believed that the energy trapped in the load 26 or more precisely the load inductance 28 is contained by the freewheeling diode 29 and that the energy trapped in the wiring inductance 30 is the only energy delivered to the fault 27. The expectation is that the energy delivered to the fault 27 includes and is limited to all of the energy trapped in the wiring inductance 30. In the events described given an arc or fault voltage drop that is lower than the source voltage the arc current will continue to flow. The stray inductance 30 and load inductance 28 act in unison to maintain the flow of current. In this case the power source 24 provides an indeterminate quantity of additional energy to the arcing fault 27.

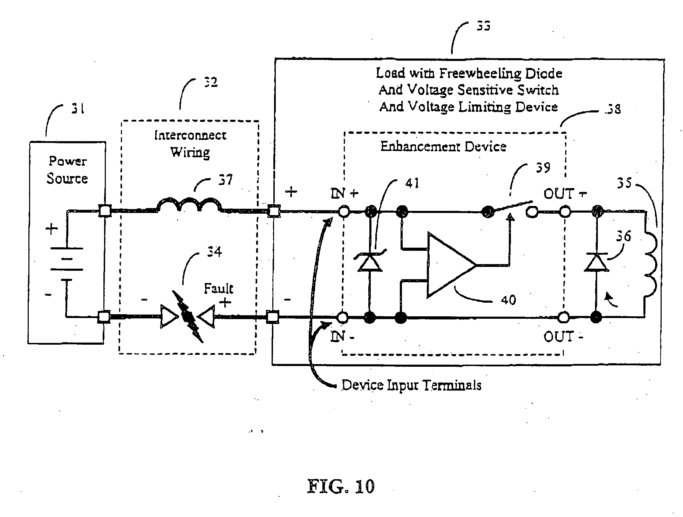

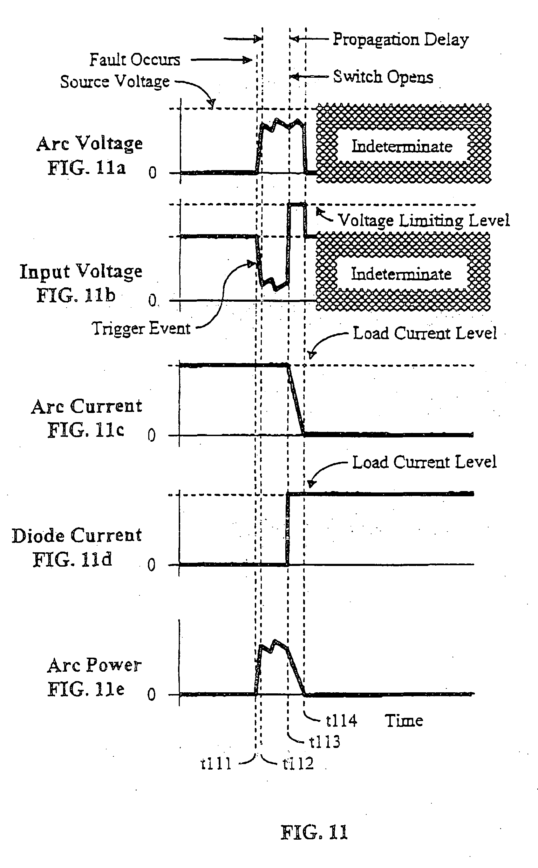

An artifact of the current interruption in the presence of stray wiring inductance is a voltage transient. FIG. 10 illustrates a technique to manage the voltage transient. A voltage liming device 41 connected across the input terminals of the enhancement device 38 limits the voltage transient. The voltage transient results from the opening of switch 39 when current is trapped in the stray wiring inductance 37. The transfer of current in the presence of stray wiring inductance with a voltage limiting device is illustrated in FIG. 11 with reference to FIG. 10. Given an arcing fault 34 that occurs at time t111 the arc voltage FIG.11a will appear at time t111 and increase abruptly. The resulting decrease in input voltage FIG. 11b is detected by the voltage sense circuit 40 at time t112. After the operational or propagation delay spanning time t112 to time t113 switch 39 opens. The current trapped in the inductive load 35 is transferred into freewheeling diode 36. The freewheeling diode current is illustrated in FIG. 11d. However, current remains trapped in the stray line inductance 37. This current continues to flow through the power source 31, stray line inductance 37, arcing line fault 34 and voltage limiting device 41. The presence of the conducting voltage limiting device 41 at the input terminals of the enhancement device 38 determines the input terminal voltage FIG.11b during the time period spanning time t113 to time t114. During this time period the arc current FIG. 11c is driven to zero. Recall that without the enhancement device 38 the arc current FIG 11c could continue to flow for a substantially longer period of time. The result would be much higher energy, integration of arc power FIG 11e over time, delivered to the arcing line fault 34.
Turn On Delay to Arrest Sputtering Faults

Intermittent faults or sputtering arcs require consideration. These conditions may allow the arc voltage to drop to zero or sufficiently low to cause the switch to reconnect the load device. If the switch reconnects the circuit and the conditions that caused the arc are still present the arc could re-strike. The energy can become additive to the previously delivered energy and result in an ignition.

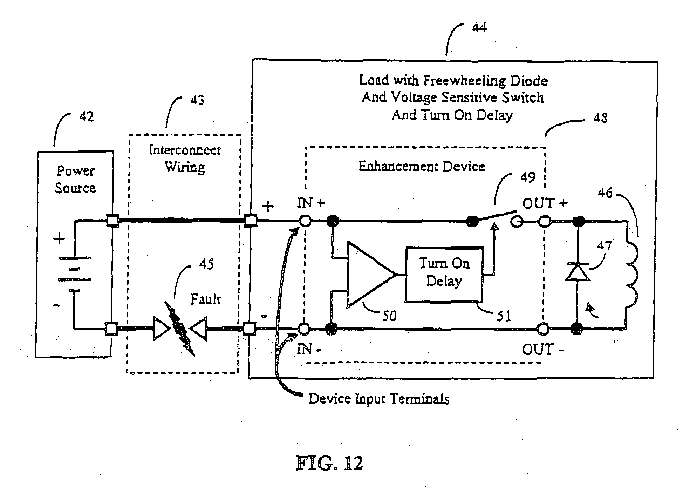

A solution to the potential of re-strike is to incorporate a turn on delay into the device as shown in FIG. 12. The turn-on delay 51 acts to delay the transition of the switch 49 from the off state to the on state after the input terminal voltage constraints of the enhancement device 48 are satisfied. The length of delay must be sufficient to clear or dissipate the energy from a previous arc. Ideally the turn off propagation delay of switch 49 in response to voltage sensor 50 will remain as short as possible.

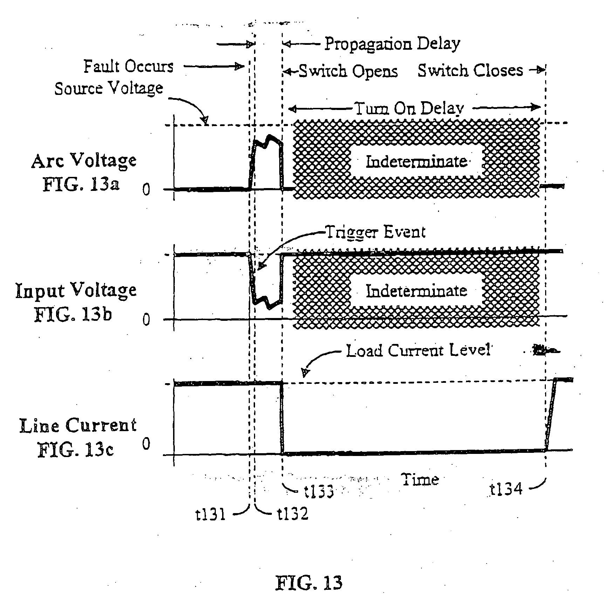

The turn on delay creates a period of time that the circuit remains open to prevent the arc from re-striking. The operational waveforms incorporating the delay are illustrated in FIG. 13. The sequence of events is as follows. The arcing fault 45 occurs at time t131. The resulting input voltage drop FIG. 13b is detected by the voltage sense circuit 50 at time t132. After the propagation delay spanning time t132 to time t133 the switch 49 opens. At this point in time the current trapped in the inductive load 46 transfers into the freewheeling diode 47. Also starting at time t133 the turn-on delay circuit 51 prevents the switch 49 from closing for the time period spanning time t133 to time t134.
Independence of Device Configuration or Fault Location

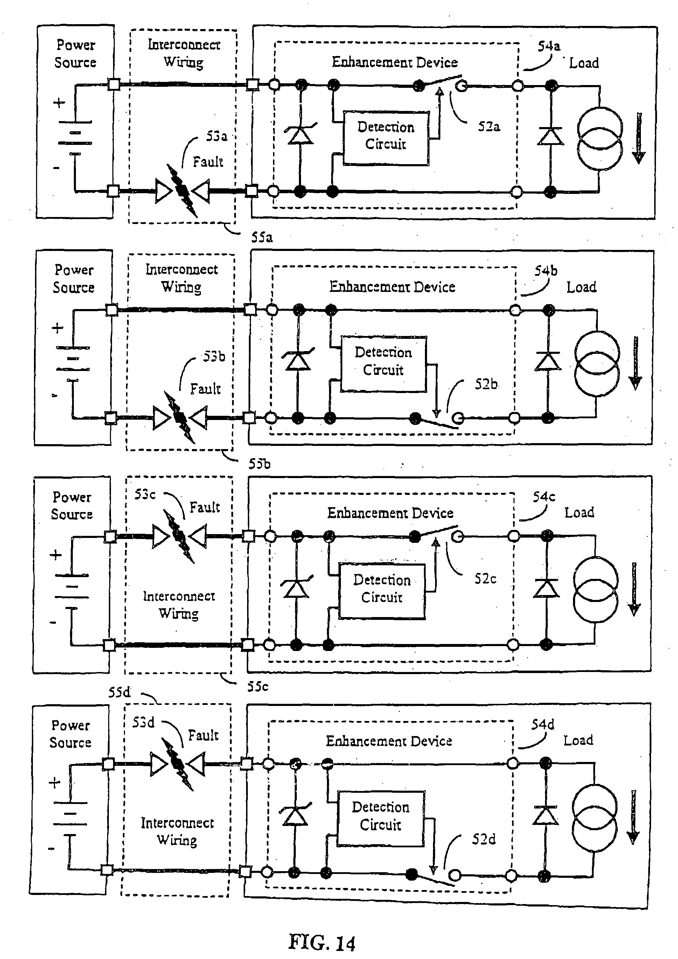

The diagram in FIG. 14 illustrates various locations for the wiring fault 53a, 53b, 53c, 53d in combination with various arrangements of the enhancement device 54a, 54b, 54c, 54d and the switch 52a, 52b, 52c, 52d. The concept works well independent of the variations. The basic principals apply. Monitor the voltage at the load end of a power circuit branch 55a, 55b, 55c, 55d to detect the voltage drop introduced by the fault and interrupt the current feeding the fault.

The four configurations provided in FIG. 14 detail the following arrangements of the switch and fault:
- 1.: Switch 52a in the positive leg and fault 53a in the negative leg.
- 1.: Switch 52b in the negative leg and fault 53b in the negative leg.
- 2.: Switch 52c in the positive leg and fault 53c in the positive leg.
- 3.: Switch 52d in the negative leg and fault 53d in the positive leg.

In each configuration the points of detection are the input terminals to the enhance device 54a, 54b, 54c, 54d. Also, in each case the overall current in the loop is interrupted in response to the application of the fault.
Alternate Use of Detection Circuit Output:

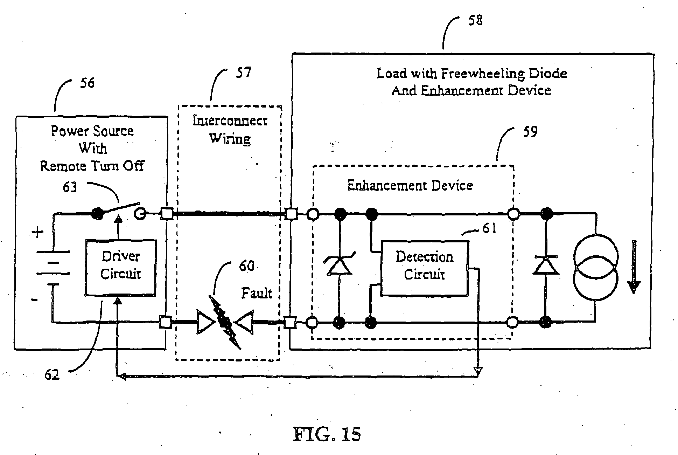

FIG. 15 illustrates that the detection function of the device can be used for purposes other than control of an integral switch. The enhancement device 59 is located to have input terminals at the load end of the interconnect wiring 57 that is at risk of a fault 60. The detection circuit 61 monitors the input terminal voltage to the enhancement device 59. The output of the detection circuit 61 is provided to a remote turn-off driver circuit 62 and switch 63 that are part of the power source 56. This example employs the fault detection information to interrupt or turn off the power source. Note that the turn on delay or restart logic may have to be implemented local to the switch and its associated driver circuit.

The detected fault information could be used for many functions such as: Fault Indication, Fault Logging, etc...
Interposing Controls or System

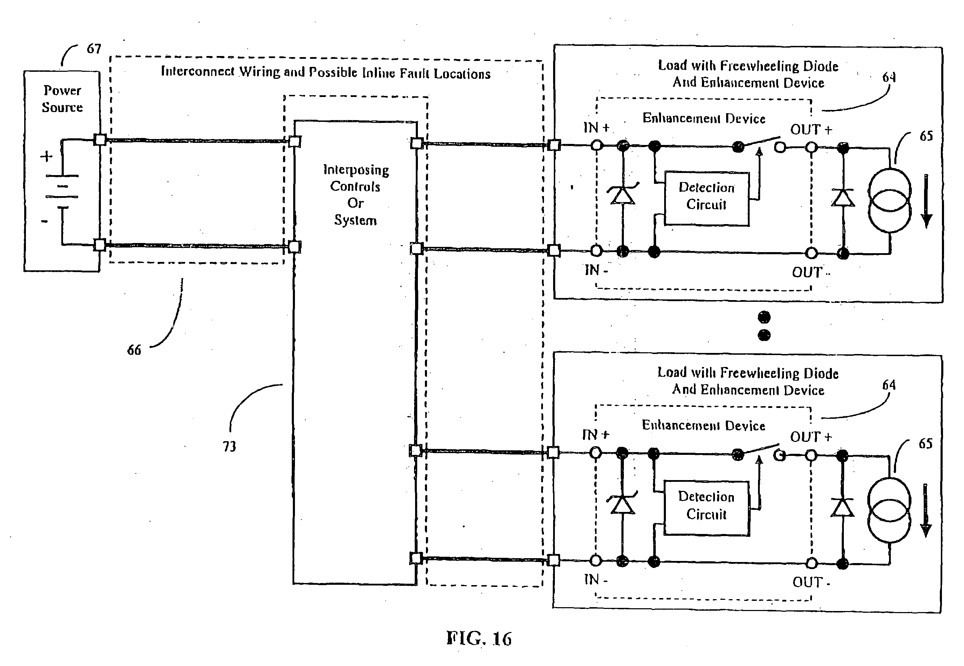

The diagram in FIG. 16 illustrates a system that employs the enhancement device 64 in several locations. The enhancement device 64 is included with each load 65.

In this type of system a fault could occur at any point along the interconnect wiring 66 or feeder circuits that extend from the power source 67 throughout the system. The enhancement devices 64 will respond to line faults in their individual feeder circuit or the main feeder circuit from the power source 67. It should be noted that a line fault in the main feeder circuit will likely result in the operation of all of the enhancement devices. A fault in the feeder branch to an individual load 65 will likely result in the operation of only the enhancement device 64 dedicated to that load.

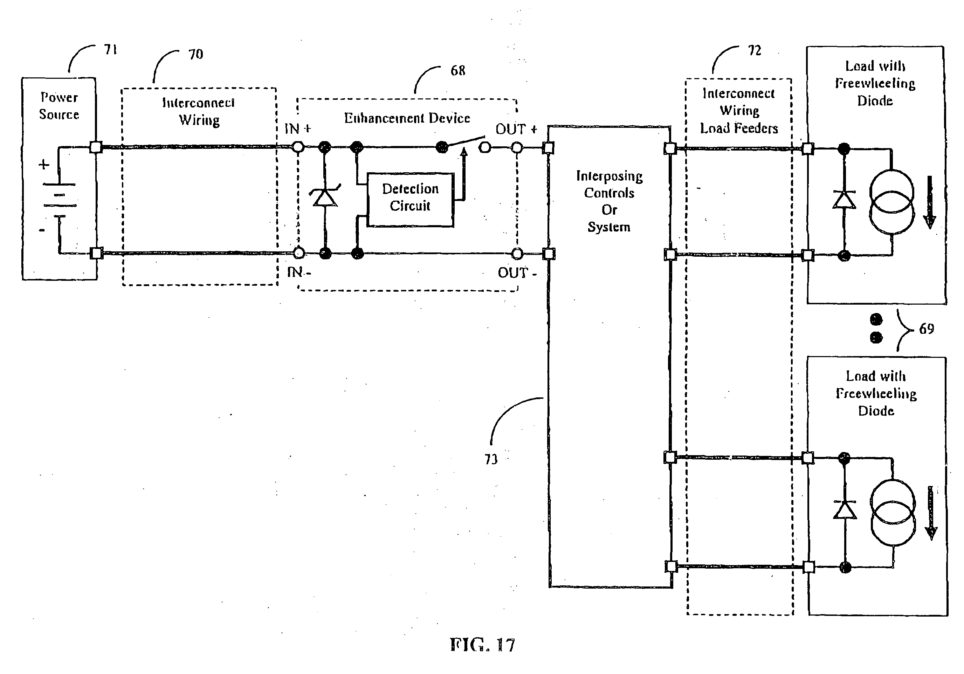

The diagram in FIG. 17 illustrates a system that employs the enhancement device 68 in a location that feeds several loads 69. In this case the device is located at a point or branch in the network that carries a level of current that would otherwise have the potential of causing an ignition if the device were not present.

In this type of system a fault could occur at any point along the wiring 70 or feeder circuits 70 that extend from the power source 71 throughout the system. The enhancement device 68 will respond to line faults in the main feeder circuit 70 from the power source 71. It should be noted that a fault in the feeder branch 72 to an individual load 69 will not result in the operation of an upstream enhancement device 68.

The enhancement devices may be located throughout the power distribution network. The location and configuration of the devices must be based on a risk assessment of the power distribution network. The risk assessment must identify branches of the network that have the potential for faults that will result in excessive energy dissipation or ignition in a hazardous atmosphere. The sense or input terminals of the devices must be located on the load side of any branch of the circuit which is otherwise at risk of a fault of unacceptable energy level. The switch controlled by or integrated into the enhancement device must be located in the loop current path for the at risk branch circuit. In addition consideration must be given to the risk assessment of the interposing controls 73.
Redundant Implementation:

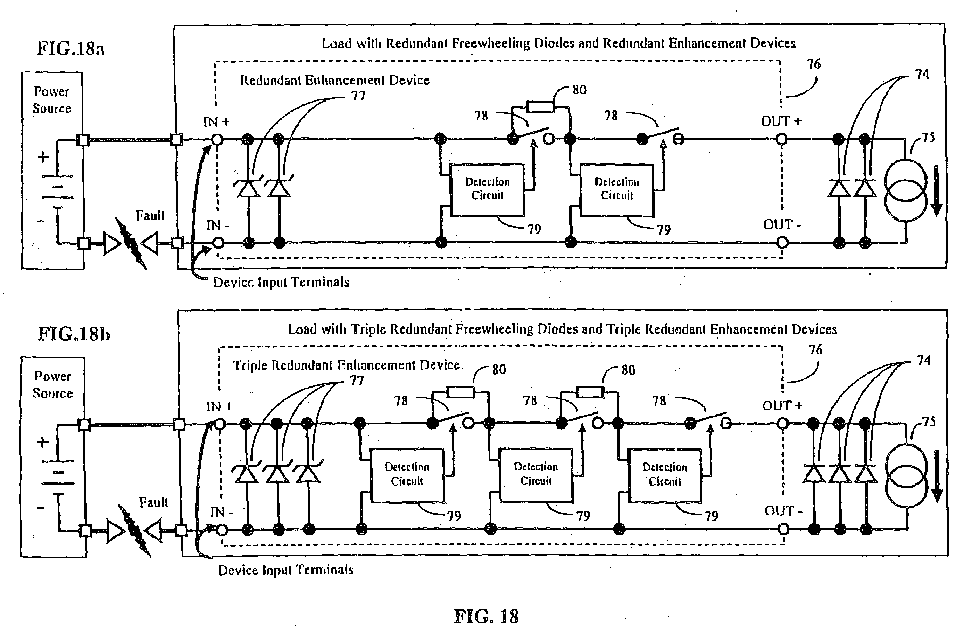

The diagram in FIG. 18 illustrates redundant and triple redundant enhancement devices. The use of redundant devices could be required by safety related applications that require limiting fault energy in the presence of component failures. These applications include circuits employed in intrinsically safe components or systems. Several standards that are written to govern designs for these applications are IEC 60079-11, EN50020 and Title 30 of the Code of Federal Regulations.

Note that the redundant components, whether redundant FIG. 18a or triple redundant FIG. 18b are located in redundant groups. For example in cases where the load requires freewheeling diodes the redundant freewheeling diodes 74 are located in a group directly at the load 75. The major components of the enhancement device 76 are grouped also. The redundant voltage limiting devices 77 are located in parallel with each other directly across the input terminals. The switches 78 with detection circuit 79 are located feeding each other in sequence.

Notice that a bypass impedance 80 is connected in parallel with each redundant switch 78. This impedance allows any downstream enhancement device to sense the load terminal conditions regardless of the state of any upstream switch. The bypass element 80 is not required for the last or load side switch in the redundant group. In fact the bypass impedance is not required in any case. It improves the startup or restart time of the redundant implementations by eliminating the cascaded startup sequence that results from redundant switches feeding downstream devices.

The present invention reduces the energy dissipated in inline arcing wiring faults. The basic device and implementation are illustrated in FIG. 20. The enhancement device 100 is located at the load end of a power circuit branch 101 that is at risk of an arcing fault 102. The device operates on the principal of sensing the presence of the fault and interrupting the flow of current to the fault. The voltage drop introduced by the fault is sensed indirectly by monitoring the drop in voltage at the load end of the power circuit branch 101 with the fault 102 or the input terminals of the enhancement device 100. The device reacts by interrupting current in the circuit loop that includes the faulted power circuit branch.

The present invention is particularly effective in reducing fault energy in cases that include an inductive load 103 protected by a freewheeling diode 104. A freewheeling diode 104 alone will only divert inductive load 103 current when the diode becomes forward biased by the overall circuit. It is possible for an arcing fault 102 to exist in the circuit feeding the load that does not guarantee that the diode will become forward biased.

The present invention acts to interrupt the line current and facilitate transfer of the load current into the freewheeling diode. This function is of particular value in instances where the voltage across the line fault does not exceed the available source voltage. The device monitors and reacts to the device input terminal voltage. The basic device consists of a switch 105 with detection/driver circuit 106. The device is enhanced by a turn on delay in the detection/driver circuit 106 and an input voltage limiting device 107. The turn on delay improves performance in the presence of sputtering or intermittent faults. The detection circuit 106 operates the switch 105 to interrupt the line current based upon the available input voltage. This action forces the trapped current in the load 103 into the freewheeling diode 104 path. The voltage limiting device 107 limits the transient voltage resulting from the interruption of current and dissipates the energy.

The energy dissipated in the arcing fault is provided from several sources. The sources include the "Current Source" inductive load 103, current trapped in the line inductance 108 and any additional energy supplied by the power source 109. In addition to accelerating the transfer of load current into the freewheeling diode 104, the inline switch 105 interrupts the delivery of any additional energy from the power source 109.

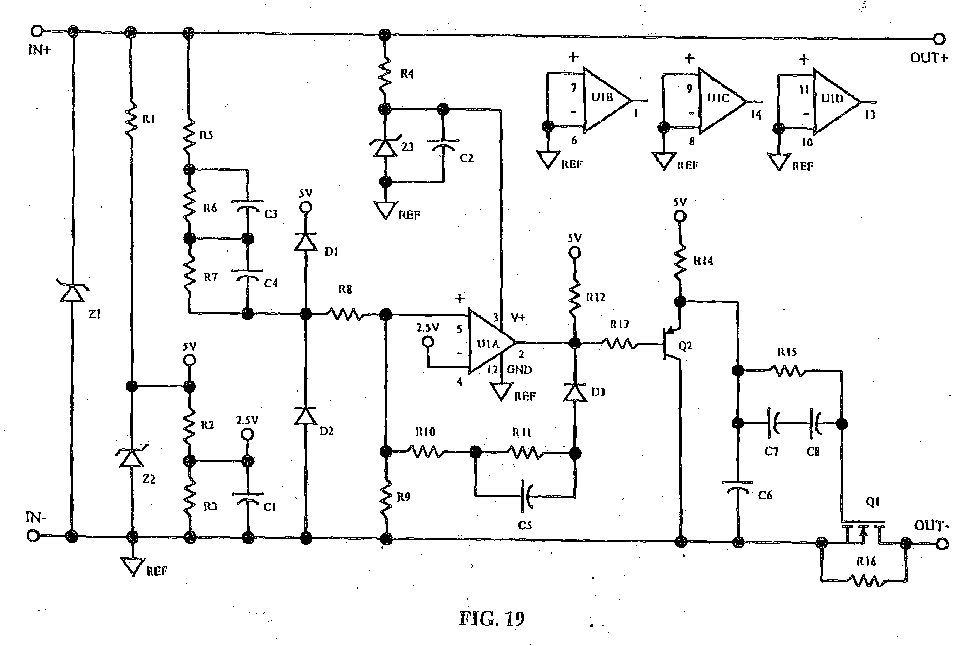

The overall circuit illustrated in FIG. 19 displays an implementation of the enhancement device. This implementation is not redundant. This specific implementation includes component values for a 12 VDC power circuit.

The input terminals are labeled IN+ and IN-. The input terminals connect to the power distribution network and receive power from the network. The output terminals are labeled OUT+ and OUT-. The output terminals connect to the load device(s). Electrical current flows into the IN+ terminal and out of the OUT+ terminal to feed the load. The current from the load returns to the enhancement device via terminal OUT-. The current returns to the power distribution network from terminal IN-.

Component Z1 provides the input voltage transient suppression function described earlier. Z1 is connected directly across the IN+ and IN- terminals. It is important to note that in redundant applications these components must be located and grouped per FIG. 18. Also, R16 may be employed in redundant applications. R16 provides the bypass impedance for each upstream switch to allow any down stream enhancement devices to have the ability to sense the input terminals. In redundant applications R16 is not required on the last switch in the redundant group as indicated in FIG. 19. R16 is not required in applications that do not employ redundancy.

The remaining components provide the detection and switch functions.

The switch function is implemented by means of MOSFET transistor Q1. Q1 is positioned to interrupt the current path between terminals OUT- and IN-. Note that the optional R16 is directly across the path from OUT- to IN-.

The gate drive signal that controls Q1 is coupled to the transistor by means of R15, C7 and C8. In non safety related applications C7 and C8 may be replaced by a single capacitor. The series connection of C7 and C8 allows for the short circuit failure of one of the capacitors in safety related applications.

The turn on, turn on delay or restart delay of Q1 is controlled by the RC network of R14 and C6. The charging rate of C6 and subsequent turn on of Q1 are controlled by R14. The turn on drive is coupled to Q1 by means of R15, C7 and C8.

The turn off of Q1 is facilitated by the turn on of Q2. Q2 discharges C6 and subsequently pulls gate charge from Q1 by means of the R15, C7 and C8 network.

Transistor Q2 is driven on by the pull down of the output of comparator U1A. Q2 is turned off by the release of the output of U1A.

The comparator U1A monitors the input voltage via the network of R5, R6, R7, C3, C4 R8, R9, D1 and D2. The monitored level is influenced by the path of R10, R11, C5 and D3 when the output of U1A is low. The network passes the input line voltage signal to the + input of U1A. The diodes D1 and D2 bound the range of the conditioned line voltage signal. Under steady state conditions the signal is scaled by the resistor divider network comprised of R5, R6, R7, R8 and R9. This scaled signal is limited by D1 and the 5 volt reference. Under the dynamic condition of falling input voltage C3 and C4 act to quickly transfer the falling voltage directly to the + input of U1A via R8 and R9. In addition the U1A provides a low line drop out protection function to prevent brown out operation.

The input line voltage is compared to the fixed 2.5 volt reference which is applied to the - input of U1A. Under normal operating conditions the conditioned line voltage signal exceeds the 2.5 volt reference and the output of U1A is floating and pulled up by R12.

The network of R10, R11, C5 and D3 provide hysterisis for the operation of U1A. If the input line voltage falls far enough it will trigger the operation of U1A, the falling output of U1A will reinforce the event by coupling some additional pull down to the + input of U1A. C5 guarantees that upon being triggered, U1A will remain low long enough to discharge C6 and reset the turn on delay function.

Note that the unused comparator channels of U1 including U1B, U1C and U1D have all of their inputs connected to reference common.

Resistor R4, zener diode Z3 and capacitor C2 provide 5 VDC power to the comparator U1.

Resistor R1 and zener diode Z2 provide 5 VDC logic power for the overall circuit. Resistors R2 and R3 develop a 2.5 VDC reference which is filtered by C1.

Under normal operating conditions the power distribution network supplies input power directly to the IN+ and IN- terminals of the enhancement device. In this case the input power is nominally 12VDC. The comparator circuit U1A detects the normal operating voltage and allows its output to float. As a result Q2 is biased off and Q1, the main output switch is biased on. This provides a direct connection from OUT- to IN-. In this case power is provided directly to the load.

In response to a falling input voltage across IN+ and IN-, the comparator U1A will pull its output down. This will turn on Q2 and subsequently turn off Q1.

When the input voltage level is restored comparator U1A will release its output. This will turn off Q2 and allow C6 to charge. When C6 is sufficiently charged Q1 will turn on.
Component Tables for the preferred embodiment (the invention is in no way limited to or by these values):

**Part Numbers:**

| | | | | | |
|---|---|---|---|---|---|
| U1: | LM139A | | | | |
| Q1: | IRFZ34N | Q2: | 2N2905A | | |
| Z1: | P6KE24A | Z2: | 1N4689 | Z3: | 1N4689 |
| D1: | 1N4148 | D2: | lN4148 | D3: | 1N4148 |

**Capacitor Values:**

| | | | | | |
|---|---|---|---|---|---|
| C1: | 1000 pF | C2: | 0.033 uF | C3: | 22 pF |
| C4: | 1000 pF | C5: | 10 pF | C6: | 0.022 uF |
| C7: | 0.033 uF | C8: | 0.033 uF | | |

**Resistor Values:**

| | | | | | |
|---|---|---|---|---|---|
| R1: | 9.09 K Ohms | R2: | 140 K Ohms | R3: | 124 K Ohms |
| R4: | 1.00 K Ohms | R5: | 9.09 K Ohms | R6: | 150 K Ohms |
| R7: | 124 K Ohms | R8: | 30.1 K Ohms | R9: | 124 K Ohms |
| R10: | 20.0 K Ohms | R11: | 3.00 Meg Ohms | R12: | 499 K Ohms |
| R13: | 499 Ohms | R14: | 249 K Ohms | R15: | 30.1 K Ohms |
| R16: | 10 K Ohms | | | | |

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. An apparatus which limits energy delivered to inline faults in electrical power distribution networks comprising:
an input having a positive and negative lead connected to a source of DC power;
an output having a positive and negative lead connected to a load device;
a detector for detecting the inline fault; and
a mechanism to interrupt the flow of current to or from the load device in response to a detected fault.

2. An apparatus as described in Claim 1 wherein the interrupting mechanism is an integral switch connected between the positive input lead and the positive output lead or an integral switch connected between the negative input lead and the negative output lead.

3. An apparatus as described in Claim 2 which includes a plurality of interrupting switch mechanisms connected between the positive input lead and the positive output lead or an integral switch connected between the negative input lead and the negative output lead.

4. An apparatus as described in Claim 2 which includes an integral voltage limiting device connected directly across the input positive and negative leads.

5. An apparatus as described in Claim 4 which includes a plurality of voltage limiting devices connected directly across the input positive and negative leads.

6. An apparatus as described in Claim 1 which controls a remote switch located in the current feed or return path as the interrupting mechanism.

7. An apparatus as described in Claim 1 which controls a remote turn off function of the DC power source as the interrupting mechanism.

8. An apparatus as described in Claim 1 wherein the detector senses the input voltage to the device and responds to a drop in or dropping input voltage.

9. An apparatus as described in Claim 8 wherein the detector includes a start up or restart delay to provide protection against sputtering faults.

10. An apparatus as described in Claim 9 wherein the start up delay function is fully reset during each operation of the device.

11. An apparatus as described in Claim 8 wherein the detector includes a low line drop out protection function.

12. An apparatus as described in Claim 1 which feeds an inductive load device or devices with integral freewheeling diode or diodes.

13. A method by which the energy delivered to an inline fault in a DC electrical power distribution network can be limited comprising the steps of:
detecting the fault by indirectly sensing a voltage drop induced by the fault by monitoring voltage at a load end of a power circuit branch for a drop; and
interrupting flow of current in a loop in which the fault is located.

14. A method as described in Claim 13 including the step of reducing the energy delivered to a fault in the network feeding a load device or devices in the presence of faults with voltage drops lower than a level of the DC power source.

15. A method as described in Claim 13 including the step of reducing the energy delivered to a fault in the network feeding a load device with inductive characteristics that includes an integral freewheeling diode.

16. A method as described in Claim 13 including the step of incorporating a restart delay in the detection circuit that latches in a fault condition for a specified period of time to inhibit reconnection to an existing arcing fault.

17. A method for determining the safety of an electrical system comprising the steps of:
testing the electrical system that includes inductive loads protected by freewheeling diodes which prohibits replacing the inductive loads protected by freewheeling diodes with non-inductive or resistive loads for test purposes; and
determining whether the electrical system is safe.

18. A method as described in Claim 17 including the step of requiring that the test must be performed in the presence of stray line inductances and the inductive loads protected by freewheeling diodes.
